(19) **Europäisches Patentamt / European Patent Office / Office européen des brevets**

(11) **EP 4 604 451 A1**

(12) # EUROPEAN PATENT APPLICATION

(43) Date of publication:
20.08.2025   Bulletin 2025/34

(21) Application number: 24158107.3

(22) Date of filing: 16.02.2024

(51) International Patent Classification (IPC):
*H04L 9/40* (2022.01)      *G06N 5/025* (2023.01)
*G06N 20/00* (2019.01)

(52) Cooperative Patent Classification (CPC):
**H04L 63/1416; G06N 5/025; G06N 20/00;
H04L 63/1441**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **British Telecommunications public
limited company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **COMMUNICATIONS NETWORK INTRUSION RESPONSE SYSTEM TRAINING**

(57)    The disclosed technology relates to a computer-implemented method of training an intrusion response system, IRS. The method comprises receiving a plurality of rules for responding to cyber-attacks. The method generates additional rules by applying a data augmentation technique to the plurality of rules and provides the plurality of rules and the additional rules as training data to the IRS. Some examples of the method detect a potential threat that matches at least one of the rules in the plurality of rules and additional rules with the IRS, subsequent to training the IRS with the training data.

RECEIVE A PLURALITY OF RULES FOR RESPONDING TO CYBER-ATTACKS 300

GENERATE ADDITIONAL RULES BY APPLYING A DATA AUGMENTATION TECHNIQUE TO THE PLURALITY OF RULES 302

PROVIDING THE PLURALITY OF RULES AND THE ADDITIONAL RULES AS TRAINING DATA TO THE INTRUSION RESPONSE SYSTEM 304

OPTIONALLY, DETECT A POTENTIAL THREAT WITH THE IRS SUBSEQUENT TO TRAINING THE IRS WITH THE TRAINING DATA 306

FIG 3

Processed by Luminess, 75001 PARIS (FR)

**Description**

The present disclosure relates to creating training data for training an intrusion response system such as those used with communications networks including telecommunications networks.

BACKGROUND

An intrusion response system (IRS) is a system used to select a response to an intrusion in a communications network, such as a type of cyber-attack, like an attempt to gain unauthorised access to a user's account(s). An IRS is usually used in connection with an intrusion detection system (IDS) to detect the intrusion. There are multiple approaches that can be taken to develop an IRS, including knowledge-based approaches which use a rule base containing rules based on historical experiences. Another approach is a data-driven approach, where machine learning models are trained with training data to assign an appropriate response to an intrusion.

The examples described herein are not limited to examples which solve problems mentioned in this background section.

SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology relates to a computer-implemented method of training an intrusion response system, IRS. The method comprises receiving a plurality of rules for responding to potential intrusions to a communications network, such as cyber-attacks. The method generates additional rules by applying a data augmentation technique to the plurality of rules and provides the additional rules as training data to the IRS. Because the intrusion response system is provided with the additional rules as training data, it is able to automatically respond to a wider range of potential intrusions to a communications network. This results in improved security of the communications network.

Preferably the method comprises detecting a potential threat that matches at least one of the rules in the plurality of rules and additional rules with the IRS, subsequent to training the IRS with the training data. Because the matching is done subsequent to the training the IRS is able to operate automatically for a wider range of potential intrusions than before it was trained.

Preferably receiving the plurality of rules for responding to cyber-attacks comprises extracting the plurality of rules from a store of rules, wherein the plurality of rules is extracted by a rule reader. Extracting the rules automatically reduces the risk of errors and provides efficiency. In an example the files are log files from an IRS.

Preferably the method comprises parsing the plurality of rules, wherein parsing the plurality of rules comprises separating the rules into features and values and labelling the features and values with responses extracted from the rules, by a rule parser. Using a parser gives an efficient accurate way of obtaining the features, values and responses from the rules.

Preferably the method comprises populating a table, using a data inhabitor, with the labelled features and values. Having the data in a table format facilitates data augmentation in order to create synthetic training data.

Preferably the method comprises applying a method of interpolation to data in the table to interpolate missing values in the table. Any suitable method of interpolation may be used such making inferences from similar table rows, linear interpolation, polynomial interpolation. Using interpolation is found to be an effective and efficient way of filling missing cells of the table.

Preferably the method of interpolation is linear interpolation. Linear interpolation is efficient to compute and found to be effective for the IRS application.

Preferably the method comprises approving the data in the table by a human-in-the-loop, HITL mechanism or a computer implemented approval mechanism. Using an approval mechanism is found to work well in practice for ensuring sensible rules are created.

Preferably generating additional rules by applying a data augmentation technique to the plurality of rules comprises at least one of: combining, splitting, or swapping rules in the plurality of rules.

Preferably generating additional rules further comprises applying data generation techniques to the plurality of rules and the additional rules. These are found to be efficient and effective ways of synthesizing more rules in practice for IRS applications.

Preferably providing the plurality of rules and the additional rules as training data to the IRS comprises uploading the rules to a database using a data uploader, wherein the database is accessible by the IRS. The IRS is then able to use the additional rules either where the IRS itself is a rule based system, or as training data to train a machine learning classifier. Supervised training is used in some cases where the known responses are the labels and the features and values are used to predict responses.

Preferably the plurality of rules is received in at least one of a textual or equation format. This gives flexibility enabling rules to be obtained in more than one format.

Preferably the plurality of rules is received from a knowledge base, wherein the knowledge base is used by a knowledge-driven approach IRS. This is a convenient way to obtain the rules.

Another aspect of the disclosed technology comprises an apparatus comprising at least one processor, and a memory storing instructions that, when executed by the at least one processor, perform a method for training an intrusion response system, IRS. The method comprises receiving a plurality of rules for responding to potential intrusions to a communications network, such as cyber-attacks. The method generates additional rules by applying a data augmentation technique to the plurality of rules and provides the additional rules as training data to the IRS. The claimed features enable the generation of enlarged training data sets for training an intrusion response system, which in turn leverages the benefits of training models on larger training data sets, resulting in numerous advantages described herein.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

BRIEF DESCRIPTION OF THE DRAWINGS

FIG 1 is a schematic diagram of a communications network, comprising an intrusion response system (IRS) and intrusion detection system (IDS).
FIGs 2A and 2B show example methods of operation for a knowledge-driven approach and data-driven approach to an IRS.
FIG 3 is a flow diagram of an example method performed to generate training data to improve an IRS.
FIGs 4A is a schematic diagram of a data creator for creating data for use by an IRS.
FIG. 4B is a schematic diagram of components of the data creator of FIG. 4A.
FIG 5 is a flow diagram of a method performed at least in part by a data creator such as that of FIG. 4B.
FIG 6 is a flow diagram of a method of populating a table and interpolating missing values, where the method may be performed by a data inhabitor such as that of FIG. 4B.i
FIGs 7A and 7B show example tables created by a data inhabitor such as the data inhabitor of FIG. 4B.
FIG 8 shows an example table created through data augmentation techniques by a data creator.
FIG 9 shows an exemplary computing device in which examples of a data creator are implemented.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

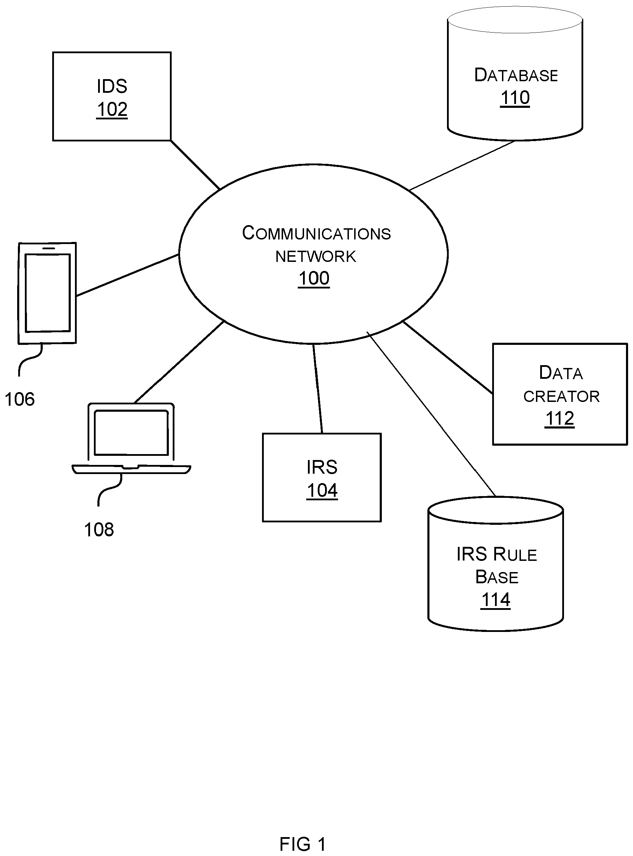

FIG 1 of the accompanying drawings shows a schematic diagram of a communications network 100, in which an intrusion response system (IRS) 104 and/or intrusion detection system (IDS) 102 is used. The communications network 100 comprises a data creator 112, a database 110 storing training data for training an IRS 104, and an IRS rule base 114. The data creator 112 creates training data comprising rules which are added to the IRS rule base 114 and/or to the database 110. The data in database 110 is used in some examples to train a machine learning component of an IRS 104 in order to improve performance of the IRS. In some cases the rules which are added to the IRS rule base 114 are used by the IRS to improve its performance.

The communications network 100 is any network where messages or information are transmitted such as a telecommunications network. The communications network comprises interconnected nodes such as routers, switches, firewalls, base stations, end user communications devices such as smart phones, or other nodes. A user can access the communications network 100 through devices such as portable computing devices, wearable computing devices, mobile phones 106 or computers 108, however, there are often attempts to access the communications network 100 for malicious purposes, such as an unauthorised user trying to gain access to the communications network 100 or to one or more services provided using the communications network 100. Hence, there is a clear need to detect intrusions, which would have a beneficial consequence of assisting in preventing the leak of confidential information and/or prevent unauthorised access to private computing resources.

The communications network 100 comprises an IDS 102 which may be used to detect the intrusions. IDS 102 is any commercially available IDS or other well-known IDS functionality. An IDS 102 comprises a device or software application that monitors a communications network for threats and/or malicious activity. There are multiple detection regimes that an IDS employs to detect intrusions. Some IDSs use signature-based detection, where data (e.g. network traffic) is analysed and the signatures of threats (e.g. malware) are detected by the IDS. Other IDSs use anomaly-based detection, where machine learning models are trained to recognise 'good' network traffic, and these models then detect deviations from the good traffic, which are said to be anomalies, and consider if these deviations are malicious activity. Other IDS detection regimes exist such as stateful protocol analysis detection and reputation-based detection. IDSs range in operation from single devices to entire networks.

The communications network 100 also comprises a IRS 104. Once an IDS 102 has detected an intrusion, an IRS 104 assigns a response to the intrusion (e.g. if IDS 102 detects malware on a device, then IRS 104 responds by air gapping the device, or if IDS 102 detects several unauthorised attempts to access an account, then IRS 104 responds by blocking access to an account). Again, there are several approaches to IRS 104 technology, and the inventors recognise approaches using one of two separate approaches, a knowledge-driven approach (KDA) or data-driven approach (DDA), both of which are described herein. Despite being two separate approaches, both generate responses to detected intrusions (e.g. block an account, airgap a device, reroute malicious traffic to a sink). Similarly, to IDSs, IRSs range in operation from single devices to entire networks. IRS 104 is implemented using any computer implemented IRS technology. IRS 104 comprises a device or software application that receives information about detected threats and/or malicious activity from an IDS 102 and recommends and/or automatically implements mitigating actions to the threats and/or malicious activity. The mitigating actions comprise reporting or automatically blocking the threats and/or malicious activity by sending instructions to nodes of the communications network 100. In some examples, a device connected to the communications network has malware, and a mitigating action taken by the IRS is to airgap the device. The DDA to IRS technology uses high computing power and/or machine learning models to analyse data, carry out training and converge towards specific actions for similar attack data, leading to generation of a response. In some examples the response comprises instructions sent to one or more communications network nodes of the communications network 100. The KDA to IRS technology generates rules based on wisdom from historical experiences. An IRS selects and implements mitigating actions. A KDA IRS requires a store of rules for the rules created from its historical experiences, so that these rules are accessible to assign an appropriate response. In some examples, a KDA IRS stores the rules in an IRS rule base 114. An IRS rule base 114 is a store of rules and responses that can be used by an IRS. In an example each rule is an IF THEN rule comprising a condition which if met results in a specified action being triggered.

The inventors recognise that the DDA and KDA are two separate approaches. However, the DDA, which exploits machine learning models, requires training data to be effective and to remain up to date. Most IRSs use a KDA, which often require experts for action selection, which is time consuming and dependent on the knowledge of an expert within a team. An issue that frequently arises when trying to use a DDA, rather than a KDA, is the lack of training data. The methods described herein describe a method of training a DDA IRS, by generating training data from existing rules and responses. This reduces the dependency on experts as training data is generated for specific needs or situations. Generation of training data also enables a solution to the issue of lack of available training data for DDA IRSs. This data creation approach also is highly extensible, and the methods described are applicable to any field that uses sets of rules. Finally, the methods described are used to refine existing datasets, which keeps databases dynamic and up to date, therefore also ensuring the machine learning models remain up to date.

In some examples an IRS uses a hybrid of a KDA and a DDA.

The data creator 112 is computer implemented functionality which is deployed at any computing entity in communication with the IRS, and either or both of the IRS rule base 114 and the database 110. The data creator 112 receives a plurality of rules for responding to cyber-attacks and creates more such rules as described in more detail below. Each rule is an IF THEN rule comprising a condition relating to a potential intrusion event, and an action being a response to the potential intrusion event. The created rules are either added to IRS rule base 114 or to database 110 or both. Where the IRS 104 uses a knowledge-driven approach, the rules in IRS rule base 114 are used to compute responses to potential intrusion events detected by IDS 102. Where the IRS 104 uses a data-driven approach, the rules in database 110 are used as training data to train a machine learning model to compute responses to potential intrusion event detected by IDS 102. A hybrid of these methods is used in some examples.

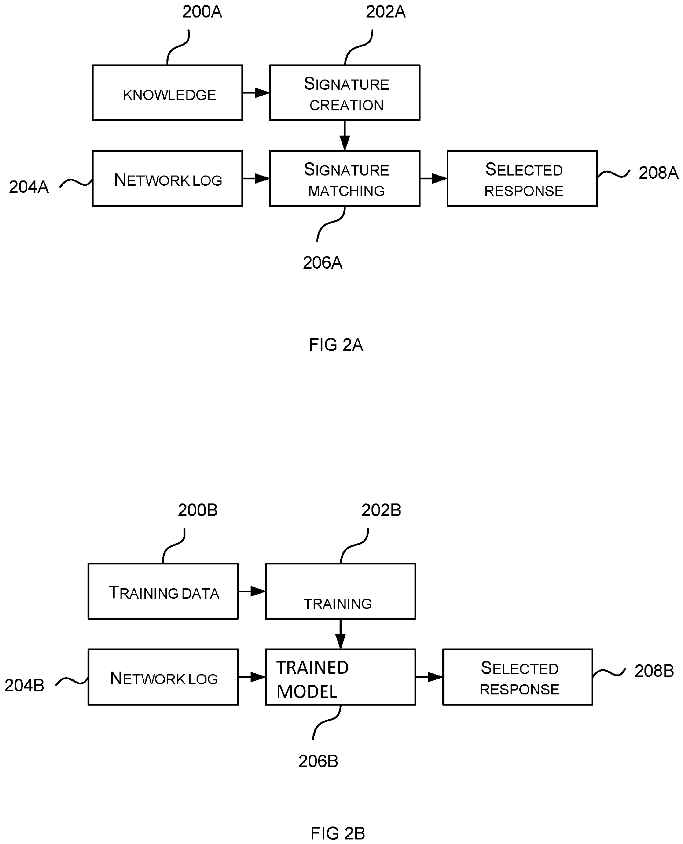

FIG 2A shows a knowledge-driven approach (KDA) for creating an IRS. KDAs provide collective wisdom from historical experiences. In 200A, knowledge is received in the form of rules. In 202A, signature creation occurs, which is where a signature is created so that a definition of how a rule is detectable (e.g. if a rule said how to detect several unauthorised access attempts to an account, define the signature on how those attempts should be noticed). In 204A, network logs are received which contain the information detailing the network traffic and will contain many signatures. In 206A, a process of signature matching is performed. If the signatures found during 202A are found to match with any signatures in the network traffic received in 204A, then the signatures match as required in 206A. Finally, a response is selected 208A based on the type of intrusion detected by the signatures (e.g. air gap the device or send traffic to a sink as two examples of responses that could be selected). The response selected based on the detected signature can eventually be formalised into a rule that the system should follow if the conditions are met, and then implemented in the system. In general, the steps shown in FIG 2A can be merged or swapped in order, depending on complexity and issue to be solved. Overall, the approach in a KDA is to define an issue, gather background information (e.g. network traffic logs contain the information needed), conceptualise the knowledge (e.g. filter the logs for relevant information), integrate the knowledge (e.g. review network logs for an intrusion to look for patterns), formalise the knowledge into a rule, verify that the rule is sensible and implement the rule.

There are a variety of advantages to using a KDA for creating an IRS. As the decisions are based on historical wisdom, there will be a focus on the issues that are frequent or regularly dealt with. KDAs are established on varying qualities of information, so they are able to perform better when updated and learn from mistakes. Methods for implementing a KDA are often non-algorithmic, and so partial and/or uncertain knowledge will still generate an appropriate response. However, despite these advantages, there is much reason to exploit a data-driven approach which uses machine learning models to generate appropriate responses to intrusions.

FIG 2B shows a data-driven approach (DDA) for creating an IRS. In 200B, training data is received (e.g. rules, or network logs). The training data is labelled training data in some cases since responses are known. In 202B, training occurs using the training data to train a machine learning model such as a machine learning classifier. Where the training data is labelled the training is supervised training. In an example the machine learning classifier is a multi-layer perceptron, a random forest classifier, a support vector machine or any other machine learning classifier. In an example where the machine learning classifier is a multi layer perceptron supervised learning via backpropagation is used. The trained model 206B receives generic network logs 204B which the trained model analyses and computes predicted responses 208B. An example of a response is a predicted need to airgap the device infected with malware, or to trigger shutdown of a communications network node.

Clearly, both approaches have numerous advantages, and are independent although can be used in combination in hybrid approaches. Most IRSs use a KDA, which often require human experts for action selection, which is time consuming and dependent on the knowledge of an expert within a team. However, a DDA requires training, which requires extensive training data. Therefore, there is a desire to generate training data and train the IRS with that training data. Creation of the training data improves the DDA which reduces the dependency on human experts as training data is generated for specific needs or situations. Generation of training data also enables a solution to the issue of lack of available training data for DDA IRSs. This data creation approach also is highly extensible, and the methods described are applicable to any field that uses sets of rules. Finally, the methods described are usable to refine existing datasets, which keeps databases dynamic and up to date, therefore also ensuring the machine learning models remain up to date.

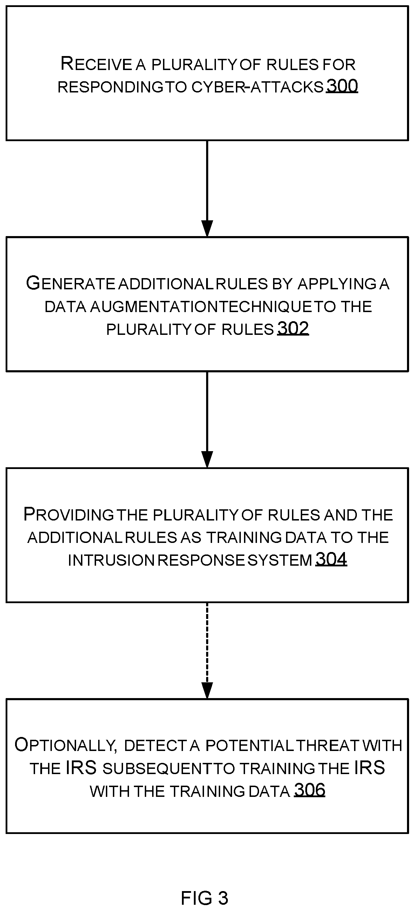

FIG 3 is a flow diagram of a method of training an intrusion response system (IRS). The method of FIG. 3 may be performed by the data creator 112 of FIG. 1 or by the IRS 104 or any other suitable computing entity. A plurality of rules for responding to cyber-attacks is received 300 (e.g. a rule, written in words for comprehensibility, such as 'if there are 5 failed attempts to access an account, block the account' among other rules). In various examples, the plurality of rules is received by a data creator 112. In various examples, the data creator 112 is implemented using any one or more of: source code, firmware, hardware. In various examples, the data creator 112 contains subsystems, which are also computer implemented. The subsystems are described herein. In various examples, the plurality of rules is received from a knowledge base such as IRS rule base 114, wherein the knowledge base is used by a knowledge-driven approach IRS. In various examples, the knowledge base is an IRS rule base. In various examples, the knowledge base is domain/expert knowledge that is input to the data creator 112.

The data creator generates 302 additional rules by applying a data augmentation technique to the plurality of rules. Data augmentation is a technique of artificially increasing the size of a dataset. This is done by creating modified copies of a dataset in a meaningful way by using the existing dataset. Data augmentation includes making minor changes to the dataset or using deep learning models to generate new data points in a dataset. In various examples, the data augmentation technique is applied by a data creator 112. In various examples, the data creator 112 contains a data uploader subsystem. In various examples, the data uploader subsystem is computer implemented.

There are numerous data augmentation techniques that can be used, either individually or in combination, depending on the application. In various examples, generating additional rules by applying a data augmentation technique to the plurality of rules comprises using a data creator 112 on the plurality of rules. In various examples, generating additional rules by applying a data augmentation technique to the plurality of rules comprises at least one of combining, splitting, or swapping rules in the plurality of rules. In various examples, after applying the data augmentation techniques, generating additional rules further comprises generating more additional rules by using data generation techniques. In various examples, the data generation techniques comprise techniques applied by a data generator tool (e.g. duplication or replication of existing rules). The use of data augmentation techniques and data generation techniques results in large datasets. Data generator tool is any commercially available data generator tool, such as Datprof, IRI RowGen, DTM Data Generator, Upscene, Redgate, etc. In various examples, the data generation techniques are applied by source code. In various examples, the data generation techniques are applied by a machine learning model. Data augmentation techniques vary according to the type of dataset used, such as textual data, audio data, visual data, etc. For natural language models, simple data augmentation techniques are used, such as synonym replacement, text substitution (rule-based, ML-based, mask-based, etc), random insertion, random swap, random deletion, and word/sentence shuffling. For audio data augmentation, data augmentation techniques such as noise injection, shifting, modifying the speed of the audio are used. As the techniques are applicable both individually and in combination, there are a very large variety of possible augmentations that can be made to a dataset, hence using data augmentation techniques on a dataset results in large amounts of training data being generated.

The plurality of rules and the additional rules are provided 304 as training data to the intrusion response system, IRS. Effectively, the original plurality of rules is received, and from these rules, more rules are generated using the data augmentation techniques, and then both the original plurality of rules and additional rules generated through data augmentation techniques are provided to the IRS for training. This means using the data augmentation has the result of enlarging the training data, by receiving the original plurality of rules and creating more rules using data augmentation, and then providing both to the IRS. This provides the IRS with enlarged training data. In various examples, the data creator 112 provides the plurality of rules and additional rules as training data to the IRS. In various examples, the data creator has a data uploader subsystem. In various examples, the data uploader provides the plurality of rules and additional rules to the IRS as training data. In various examples, providing the plurality of rules and the additional rules as training data to the IRS comprises uploading the rules to a database 110 using a data uploader, wherein the database is accessible by the IRS.

In various examples, the model used by the IRS is a supervised learning model. In various examples, the model used by the IRS is an unsupervised learning model. In various examples, the model used by the IRS is a reinforcement learning model. In various examples, the model used by the IRS uses labelled data.

In various examples, once the plurality of rules and additional rules are provided as training data to the IRS, the IRS is deployed subsequent to the training.

In rule-based examples, subsequent to training the IRS with the training data, a potential threat is detected 306 that matches at least one of the plurality of rules and additional rules in the training data provided to the IRS. In this case the response of the matching rule is obtained and used by the IRS to automatically trigger the response.

In data driven machine learning examples, subsequent to training a machine learning model with the training data, a potential threat is detected by the IDS and the potential threat is classified using a trained machine learning model to select a response. The IRS automatically triggers the predicted response.

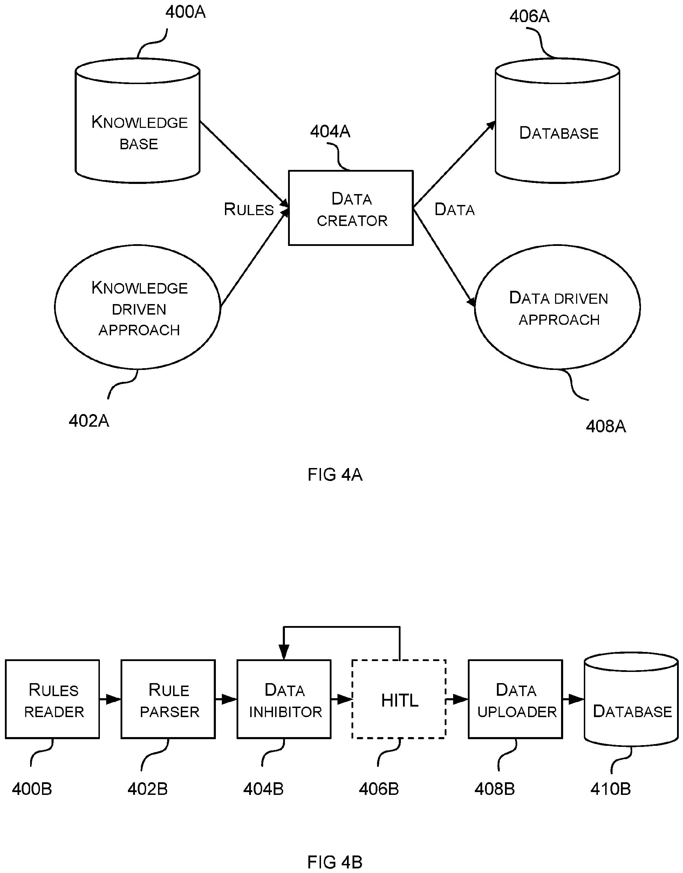

FIG 4A shows a schematic diagram of an example operation of the present method. In various examples, such as the example shown in FIG 4A, a data creator 404A is included to perform the method. In various examples, a knowledge base is included 400A. In various examples, the IRS is a knowledge-driven approach IRS 402A. In various examples, the plurality of rules is received from a knowledge base 400A, wherein the knowledge base is used by a knowledge-driven approach IRS 402A. In various examples, the plurality of rules is received by a data creator 404A. In various examples, the data creator 404A generates additional rules by applying a data augmentation technique to the plurality of rules.

In various examples, after data creator 404A has generated additional rules by applying a data augmentation technique to the plurality of rules, the plurality of rules and additional rules are provided as training data to the IRS. In various examples, the IRS that receives the training data is a data-driven approach IRS 408A. In various examples, the training data is stored in a database 406A, which is accessible by the data-driven approach IRS 408A. In various examples, the data creator 404A provides the training data to the IRS. In various examples, the data creator comprises a data uploader subsystem. In various examples, the data uploader subsystem provides the training data to the IRS and/or database 406A. In an example, the knowledge-driven approach provides the rule "if there are 4 unauthorised access attempts or malware is detected on the device, block the account" and the data creator 404A applies data augmentation techniques to split this rule into two separate rules "if malware is detected on a device, block the account" and "if there are 4 unauthorised access attempts, block the account" and then data creator 404A provides these as training data to the data-driven approach IRS 408A. This means that data-driven approach IRS 408A now has been provided with a larger training data set than available if using just the IRS rule base of a knowledge-driven approach IRS 402A. A larger training data set allows a model to be more accurate and effective in its response selection.

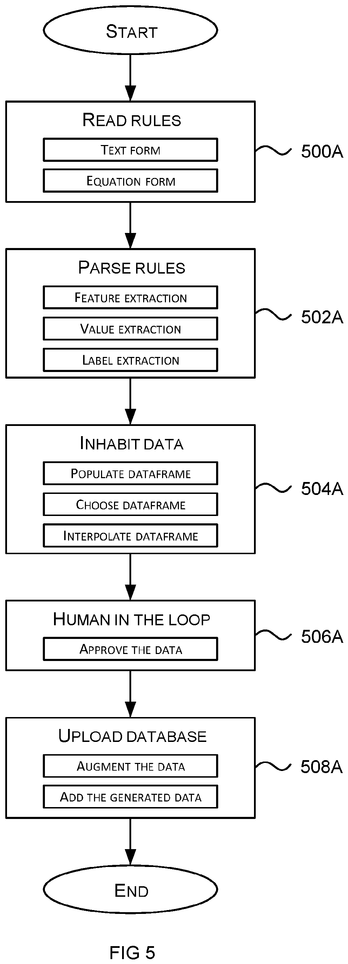

FIG 4B shows a schematic diagram of an example implementation of a data creator 404A, comprising a plurality of subsystems according to various examples. These subsystems are a rule reader 400B, rule parser 402B, data inhabitor 404B, optional human-in-the-loop (HITL) mechanism 406B and data uploader 408B. In various examples, these subsystems are computer implemented. These subsystems are described in more detail herein, with reference to FIG 5 below, but are presented in FIG 4B with a general overview and introduction.

In various examples, rule reader 400B receives a plurality of rules for responding to cyber-attacks. The rules are IF THEN rules as described above. In various examples, rule reader 400B receives the plurality of rules from a knowledge-driven approach IRS. In various examples, rule reader 400B receives the plurality of rules from a knowledge base. In various examples, knowledge base is an IRS rule base. In various examples, the knowledge base stores rules provided by security experts. Rule reader 400B reads the rules provided by (e.g.) security experts based on their experience, or rules generated by other techniques such as a knowledge-driven approach. The rule reader extracts information and facts from a store of rules. In various examples, the store of rules is provided files. In various examples, the store of rules is a database. In various examples, the store of rules is an IRS rule base.

In various examples, the rule reader 400B extracts the plurality of rules from provided files. The rules are condition-action rules, also referred to as IF THEN rules, (e.g. 'if a DDoS attack is detected and traffic volume is larger than some threshold, then reroute the traffic to a sink'). The rule reader 400B is able to extract rules such as the example given from provided files. In various examples, the rules are uploaded in a text file. In various examples, the rules are uploaded in equation format.

In various examples, a rule parser 402B receives the extracted plurality of rules from the rule reader 400B. The purpose of the rule parser 402B is to extract useful information from the plurality of rules and separate rules into their features, values and then label these features and values. More information is found in FIG 5 below. In various examples, the rule parser 402B is included in the data creator. The rule parser 402B parses the rules into a uniform format across all received rules.

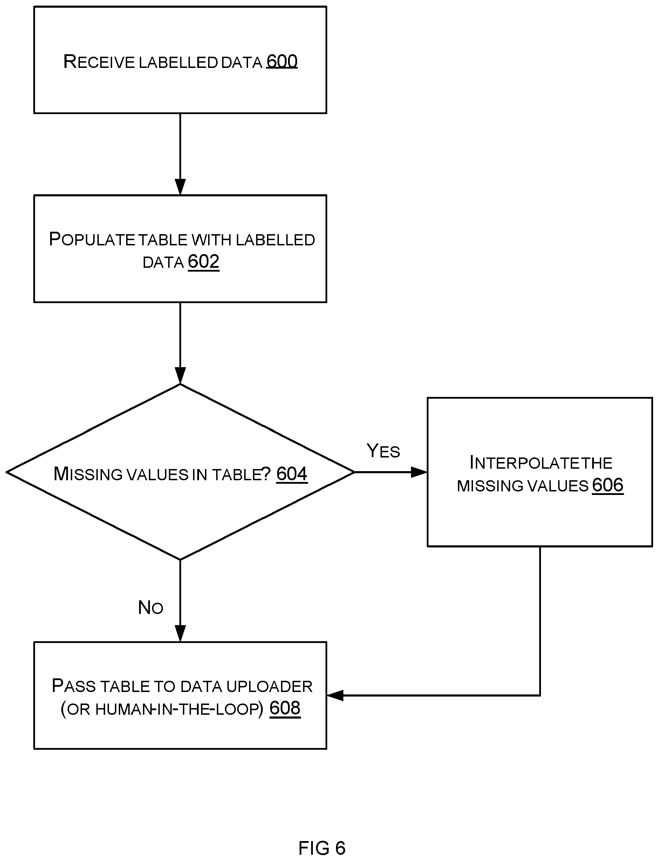

In various examples, a data inhabitor 404B populates a table with the information provided from rule parser 402B (e.g. with the labelled features and values, where a label is a known response). In various examples, the method further comprises populating a table, using a data inhabitor, with the labelled features and values. In various examples, the table is a dataframe (e.g. a dataframe from the 'pandas' library in the Python programming language). However, most rules have differing features and values to other rules, and there are cases where certain received rules will not have features and/or values in common with each other (e.g. rule 1 is 'if traffic volume from a device exceeds threshold and device has malware, then block device from network' and rule 2 is 'if traffic volume from a device exceeds threshold, then block device from network'). In examples such as this one, rule 2 does not contain a feature concerning the device having malware. As a result, when the data inhabitor populates the table with the extracted features and values, then rule 2 will have a missing entry. In various examples, data inhabitor 404B remedies this by applying a method of interpolation to the missing entries. This is discussed in more detail with reference to FIG 5 and FIG 6 below.

In various examples, a human-in-the-loop (HITL) 406B mechanism optionally receives the populated table from the data inhabitor 406B. The human in the loop mechanism is computer implemented and comprises functionality to present the populated table to a human expert for their review. The human in the loop mechanism comprises user interface elements to enable a human expert to accept, reject or modify rows or cells of the table. In various examples, the method further comprises approving the data in the table by a HITL. In FIG 4B, the HITL 406B is shown in a dotted line. This is to emphasise the optional nature of the HITL 406B. In various examples, the HITL 406B is a human expert who verifies the populated table. In various examples, the HITL 406B is automated and verifies the populated table computationally. In various examples, the HITL 406B mechanism may edit individual cells in a row or entry, rather than complete rows of the populated table. The overall purpose of the HITL 406B is to verify that the created data is correct.

In various examples, the method includes a data uploader 408B. In various examples, the data uploader 408B is subsequent to the data inhabitor 404B. In various examples, the data uploader 408B is subsequent to verification of the data in the table by a HITL 406B. In various examples, the data uploader 408B has two purposes. The first is to increase the size of the dataset. In various examples, data uploader 408B and/or the data inhabitor 404B applies a data augmentation technique to the plurality of rules to generate additional rules. By generating additional rules, the data uploader 408B is effectively enlarging the training data set, which leads to improved training of the DDA IRS when it eventually is provided the training data. More information on data augmentation is described below, with reference to FIG 5.

In various examples, providing the plurality of rules and the additional rules as training data to the IRS comprises uploading the rules to a database 410B using a data uploader 408B, wherein the database 410B is accessible by the IRS. In various examples, the IRS that accesses the database 410B is a data-driven approach IRS. Therefore, the data uploader 408B is responsible for uploading the generated rules and the original rules to the database 410B, in various examples. The database 410B is any database that is able to store provided information and able to be accessed by the IRS.

FIG 5 is a flow diagram of a method performed at least in part by a data creator such as that of FIG. 4B.

The rule reader reads 500A in a plurality of rules.. In various examples, the rule reader receives a plurality of rules for responding to cyber-attacks. In various examples, rule reader receives the plurality of rules from a knowledge-driven approach IRS. In various examples, rule reader receives the plurality of rules from a knowledge base. In various examples, knowledge base is an IRS rule base. In various examples, the knowledge base stores rules provided by security experts. Rule reader reads the rules provided by (e.g.) security experts based on their experience, or rules generated by other techniques such as a knowledge-driven approach. The rule reader extracts information and facts from the provided rules which are either in text form or equation form.

As shown in FIG 5A, the rule reader receives rules in textual and/or equation form. An example of a textual form of a rule is 'if device has malware, then airgap the device'. Another example of a textual form of a rule is 'if a DDoS attack is detected, then reroute traffic to sink'. An example of an equation form of a rule is (AttackSeverity=3)^(HostImportance=3)^ (HostAccessiblity=X)>RunScript, and for comprehensibility, this rule in text says, 'if the attack severity has a value of 3, host importance has a value of 3 and host accessibility is 'execute' access, then run a script'. The symbol ^ denotes AND. The symbol > denotes THEN. More information on rule features and values is discussed below, for the rule parser according to FIG 5. In various examples, the textual form and/or the equation form of the rules is received in any common file format.

Operation 502 is performed by the rule parser. In various examples, rule parser receives the extracted plurality of rules from the rule reader. In the example shown, rule parser receives the result of the operation of reading rules in operation 500A (by a rule reader). After the rules are read in operation 500A, the rules are parsed 502A according to various techniques. In various examples, rule parser applies feature extraction techniques to the received plurality of rules. The features of the rules are the events/conditions being checked and valued against. In an example, the severity of an attack is assigned the feature AttackSeverity. The severity of the attack is an 'event' and can be assigned a value to measure the severity of the attack. There are many other possible features such as HostImportance, HostAccessibility, AttackImpact, etc. This is highly extensible, and many features could be given depending on type of intrusion, cyber-attack, etc, or just subject to any requirement. The feature extraction techniques of the rule parser in operation 502A take the rules received and extract features. In another example, if a rule is (HostImportance=1)^(AttackImpact=CI)>ShutDown (in text for comprehensibility, 'if host importance is valued at 1, and attack impact is valued at confidentiality and integrity, then shut down the device'), the feature extraction techniques extract the features 'HostImportance' and 'AttackImpact' from this rule. The rule parser also uses value extraction techniques to extract the values of the rules. Referring to the rule in the previous example, the value extraction techniques would extract values '1', 'CI' and 'ShutDown'. In an example of applying both techniques, using another example rule of (AttackSeverity=5)^(HostAccessibility=R)>UpdateEncryption (in text for comprehensibility, 'if the attack severity is valued at 5, and the host accessibility is read access, then update the encryption'), feature extraction techniques extract the features 'AttackSeverity' and 'HostAccessibility', and value extraction techniques extract the values '5', 'R' and 'UpdateEncryption'. In an example textual form rule, the rule 'if a DDoS attack is detected and traffic volume exceeds a threshold, then reroute traffic to sink', the feature extraction techniques extract the features 'DDos Attack' and 'Traffic Volume exceeds threshold', with respective values extracted by value extraction techniques of 'True', 'True' and 'Reroute to Sink'. In various examples, label extraction techniques are also applied. The labels are the responses i.e the action parts of the condition-action rules. Label extraction techniques operate to extract actions (also referred to as responses) from rules. In the case of the rule 'if a DDoS attack is detected and traffic volume exceeds a threshold, then reroute traffic to sink' the extracted label is "reroute traffic to sink".

In various examples, the feature, value, and label extraction techniques are implemented by natural language processing. In various examples, the natural language processing uses lexical analysis. In various examples, the natural language processing comprises syntactic analysis. In various examples, the natural language processing uses semantic analysis. In various examples, a combination of these analysis techniques is implemented.

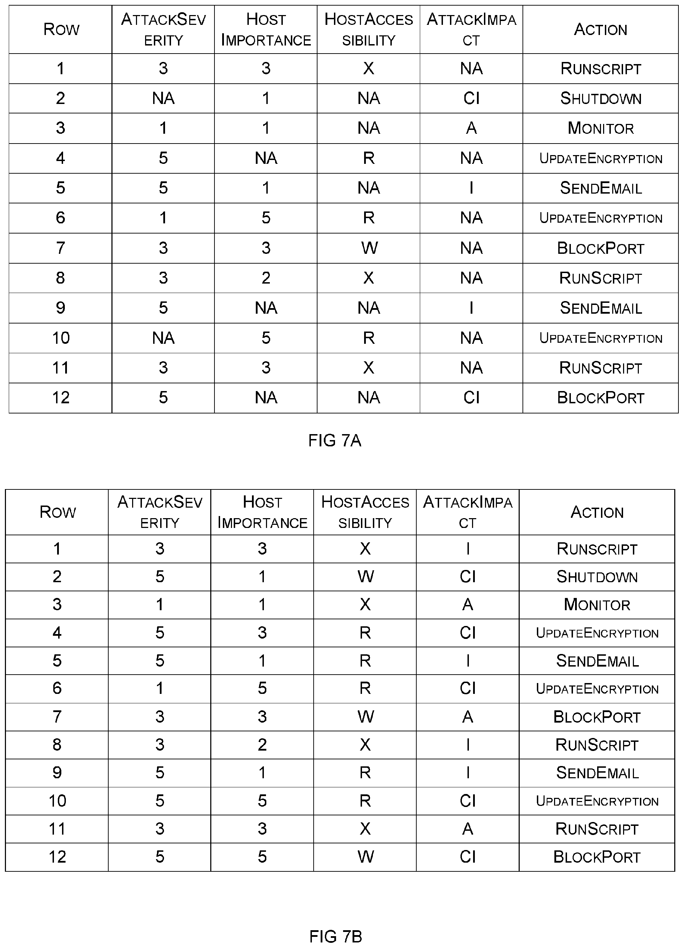

In the present example shown in FIG 5, after the operation of parsing rules 502, the parsed rules are received by a data inhabitor that inhabits the data 504 by populating it into a table and possibly filling in missing cells of the table. The extracted features, values and labels populate a table, which in the example shown in FIG 5, is a dataframe. The population of the table is implemented by the data inhabitor. As described previously, as not every rule has the same features in common, there are missing values in the dataframe, in various examples. This is remedied through interpolating the missing values using the existing data in the dataframe. More on interpolation and the data inhabitor is discussed herein, with reference to FIGs 6 and 7.

In various examples, a human-in-the-loop (HITL) mechanism 506A receives the populated table from the data inhabitor step 504A. In various examples, the method further comprises approving the data in the table by a HITL mechanism. In various examples, the HITL 506A is a human expert who verifies the populated table. In various examples, the HITL 506A is automated and verifies the populated table computationally. The overall purpose of the HITL 506A is to verify that the created data is correct.

In 508A, the operation of the data uploader is shown. In various examples, including the example shown in FIG 5, the data uploader has two purposes. Firstly, to augment the data, and secondly to upload the data to (e.g.) a database that is accessible by a DDA IRS. The data uploader magnifies the number of records in the dataset. Data augmentation refers to techniques used to synthetically increase the size of a dataset by creating meaningful modified copies of a dataset using existing data. In various examples, deep learning models are used to generate new data points. In various examples, minor changes are made to the data in the dataset.

In various examples, additional rules are generated by applying a data augmentation technique to the plurality of rules. This comprises at least one of combining, splitting, or swapping rules in the plurality of rules.

In various examples, generating additional rules further comprises applying data generation techniques to the plurality of rules and the additional rules. In various examples, the data generation techniques comprise techniques applied by a data generator tool (e.g. duplication or replication of existing rules). The data augmentation techniques and data generation techniques result in large datasets. Data generator tool is any commercially available data generator tool, such as Datprof, IRI RowGen, DTM Data Generator, Upscene, Redgate, etc. In various examples, the data generation techniques are applied by source code. In various examples, the data generation techniques are applied by a machine learning model. By applying data augmentation techniques to first augment existing rules to create more rules and further enlarging the amount of rules through data generation techniques, the amount of rules generated increases in a large amount, leading to much larger datasets. Data augmentation techniques vary according to the type of dataset used, such as textual data, audio data, visual data, etc. For natural language models, simple data augmentation techniques are used, such as synonym replacement, text substitution (rule-based, ML-based, mask-based, etc), random insertion, random swap, random deletion, and word/sentence shuffling. For audio data augmentation, data augmentation techniques such as noise injection, shifting, modifying the speed of the audio are used. As the techniques are applicable both individually and in combination, there are a very large variety of possible augmentations that can be made to a dataset, hence using data augmentation techniques on a dataset results in large amounts of training data being generated.

Finally, in 508A, the generated data (e.g. additional rules) are added to a database. In various examples, providing the plurality of rules and the additional rules as training data to the IRS comprises uploading the rules to a database using a data uploader 508A, wherein the database is accessible by the IRS. In various examples, the IRS that accesses the database is a data-driven approach IRS. Therefore, the data uploader is responsible for uploading the generated rules and the original rules to the database, in various examples. The database is any database that stores provided information and accessible by the IRS, or the database is accessible to a human who takes the training data and provides it to the IRS manually.

FIG 6 is a flow diagram of a method of populating a table and interpolating missing values performed by a data inhibitor. The figure corresponds to operation 504A of FIG 5.

At 600, labelled data is received comprising rules that have known actions/responses, where the labels are the known actions or responses. In various examples, including the one shown in FIGs 5 and 6, the labelled data is received from the rule parser. The data has been extracted, by various feature, value, and label extraction techniques, from a plurality of rules that have been received. In 602, a table is chosen/generated. In various examples, the table is a dataframe (e.g. dataframe from the 'pandas' library in Python programming language, etc). In 602, the data inhibitor populates the table with the labelled data. In various examples, the table is populated in such a way that the features are assigned as column names, and the values populate the rows. Examples of such tables are shown in FIG 7A and FIG 7B, generated, and populated in the R programming language. Note that it is not essential to use the R programming language as other languages may be used.

As explained previously, as not all rules have the same features and values, there will be missing values that arise in the table. In an example, if one rule is (AttackSeverity=3)>Shutdown, and another rule is (AttackSeverity=3)^ (HostImportance=3)>Shutdown, then clearly when applying the extraction techniques, there is no value for the feature Hostimportance for the first rule. This creates a missing value when the table is populated. As a result, decision block 604 shows a check for missing values. If there are any missing values, then according to 606, these missing values are interpolated to ensure a complete dataset.

Interpolation is the technique of adding new data points within a set of known data points. There are various reasons to use interpolation, such as filling in missing data points, smoothing existing data points and making predictions. It is a type of estimation. There are various methods to implement interpolation such as linear interpolation, polynomial interpolation, spline interpolation, mimetic interpolation, and piecewise constant interpolation (otherwise known as nearest-neighbour interpolation). These are known techniques, but linear interpolation is taking the midpoint between two values, and this can be generalised to non-linear curves through polynomial interpolation.

In various examples, the method for training an IRS further comprises applying a method of interpolation to data in the table to interpolate missing values in the table. In various examples, the method of interpolation is applied by a data inhibitor. In various examples, the data inhibitor is a subsystem of a data creator. In various examples, the method of interpolation is applied through code, using data frame packages found in various programming languages such as Python, R, MATLAB. In various examples, the method of interpolation is linear interpolation. In various examples, the method of interpolation is polynomial interpolation.

Referring again to FIG 6, if there are no missing values in the table or if the missing values have been interpolated, then the final step is to either pass the table to the data uploader (or human-in-the-loop if it is included) 608. In various examples, the table is passed to the data uploader or human-in-the-loop by the data inhibitor.

FIGs 7A and 7B show example tables that are chosen and populated during the operation of the data inhibitor,

such as the data inhabitor described in FIG 6. Below is an example list of a plurality of rules that are received by a rule reader:

$$(\text{AttackSeverity} = 3) \wedge (\text{HostImportance} = 3) \wedge (\text{HostAccessibility}=X) > \text{RunScript}$$

$$(\text{HostImportance} = 1) \wedge (\text{AttackImpact} =CI) > \text{Shutdown}$$

$$(\text{AttackSeverity} = 1) \wedge (\text{HostImportance} = 1) \wedge (\text{AttackImpact} =A) > \text{Monitor}$$

$$(\text{AttackSeverity} = 5) \wedge (\text{HostAccessibility}=R) > \text{UpdateEncryption}$$

$$(\text{AttackSeverity} = 5) \wedge (\text{HostImportance} = 1) \wedge (\text{AttackImpact} =I) > \text{SendEmail}$$

$$(\text{AttackSeverity} = 1) \wedge (\text{HostImportance} = 5) \wedge (\text{HostAccessibility}=R) > \text{UpdateEncryption}$$

$$(\text{AttackSeverity} = 3) \wedge (\text{HostImportance} = 3) \wedge (\text{HostAccessibility}=W) > \text{BlockPort}$$

$$(\text{AttackSeverity} = 3) \wedge (\text{HostImportance} = 2) \wedge (\text{HostAccessibility}=X) > \text{RunScript}$$

$$(\text{AttackSeverity} = 5) \wedge (\text{AttackImpact} =I) > \text{SendEmail}$$

$$(\text{HostImportance} = 5) \wedge (\text{HostAccessibility}=R) > \text{UpdateEncryption}$$

$$(\text{AttackSeverity} = 3) \wedge (\text{HostImportance} = 3) \wedge (\text{HostAccessibility}=X) > \text{RunScript}$$

$$(\text{AttackSeverity} = 5) \wedge (\text{AttackImpact} = CI) > \text{BlockPort}$$

This list of rules shows various features, values, and actions. The features of the rules are the events/conditions being checked and valued against. From the list of rules above, the features are 'AttackSeverity', 'HostImportance', 'AttackImpact' and 'HostAccessibility'. It is important to recognise that this list of features is not exhaustive, and a small amount of them have been used in these examples for demonstration. The list of available features is highly extensible and subject to requirement.

Next, in various examples, a rule parser extracts the features, values and labels from the received plurality of rules (e.g. the above rule list). The rule parser applies feature, value, and label extraction techniques to the plurality of rules. In an example, using the last rule, (AttackSeverity =5 ) ^ (AttackImpact = CI) > BlockPort, feature extraction techniques extract features 'AttackSeverity' and 'AttackImpact', while value extraction extracts values '5', 'CI' and 'BlockPort'. For legibility of the rules, '^' reads as 'and' and '>' reads as 'results in' (therefore, in textual form, this rule reads as 'if attack severity is valued at 5, and attack impact aimed at confidentiality and integrity of a system, then block the port').

In the example rule list above, the possible values for each feature are attack severity, between 1 and 5; host importance, between 1-5; host accessibility, either R, W, X (read, write, execute access); attack impact, either CIA, CI, CA, IA, C, I, A (confidentiality, integrity, or availability). Similarly, to the features, the values that may be taken are highly extensible and subject to requirement. In an example, attack severity is rated between 1-5 for this rule list, but this may easily be extended to be between 1-10 if desired. In another example, the rating is low, medium, or high, but this may be extended to any appropriate rating system.

In various examples, after the extraction techniques have been performed on each of the rules, and a dataframe chosen by a data inhabitor, a dataframe is populated, resulting in a table such as the one shown in FIG 7A. In this table, the rows have been manually added to act as an index for explaining the tables, however this does not need to be included in the actual table that is provided as training data. In various examples, including the example shown in FIG 7A, the labels for each column table are the features and the actions taken. The columns are then populated with the values extracted for each rule. In other examples, a different structure is used for the table.

As shown in FIG 7A, depending on which rules comprise certain features and values, the table has numerous missing values, labelled by 'NA' for clarity. In various examples, to correct these missing values, the interpolation techniques described previously are applied. This results in the table shown in FIG 7B, which no longer contains any missing values.

FIG 7B shows an example of the table in FIG 7A after interpolation techniques have been applied to it to remove the missing values and replace them with a data point. In row 2, there was previously a missing value for AttackSeverity feature. One method of interpolation, used in the creation of the table shown in FIG 7B, is to compare with other rows and fill the missing value based on similar rows. In this example, row 2 has a missing value for AttackSeverity and HostAccessibility. Row 12, however, has the same AttackImpact (value CI) and missing HostAccessibility. Hence, row 12 is judged to be similar to row 2 and therefore its value for AttackSeverity (of 5) is used. In various examples, a different method of interpolation, such as linear interpolation, is used. The interpolation methods (whether using one or a combination) are repeated until all missing values are filled. In another example from the table shown in FIG 7B, row 9 has a missing value for HostImportance, but row 5 is very similar and has a value of 1 for HostImportance. As a result, row 9 is populated with a HostImportance value of 1. In various examples, a field in the table has a value which is labelled as an unknown value. This may happen if there is low confidence in the interpolation techniques, or not enough evidence to interpolate based on existing fields. If this occurs, the entry may be labelled as 'unknown' or by any other appropriate label. In various examples, if the IRS detects the label "unknown", the IRS ignores the field.

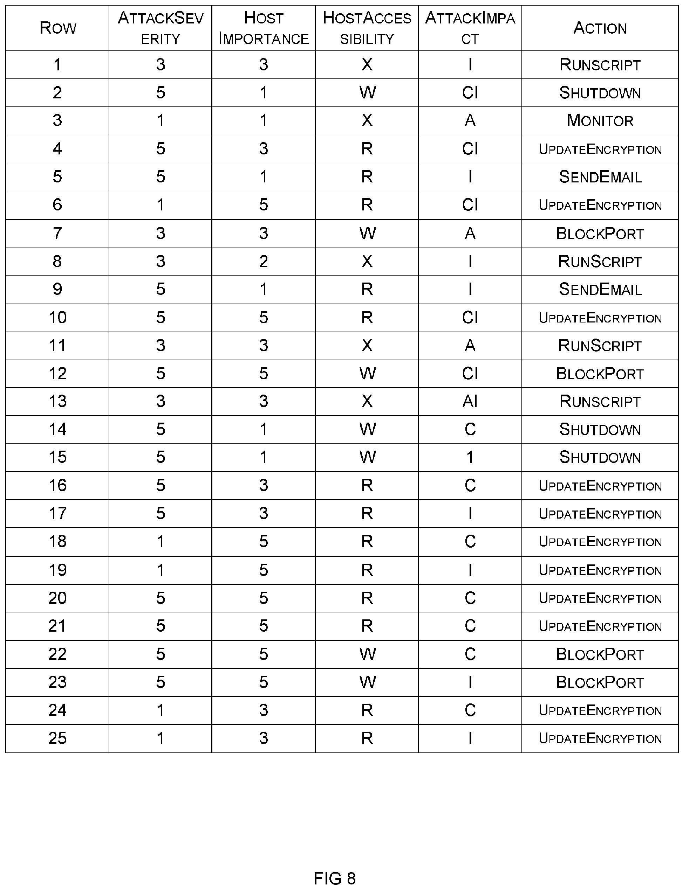

FIG 8 shows an example table created through data augmentation techniques by a data uploader. In various examples, the data uploader generates additional rules by applying a data augmentation technique to the plurality of rules. In various examples, the plurality of rules is contained within a table (e.g. a dataframe).

Comparing FIG 8 to FIG 7B, it is clear that it is the same table between rows 1 and rows 12, as FIG 8 is the result of applying data augmentation and data generation techniques to the data contained within the table shown in FIG 7B. Hence, FIG 8 represents the plurality of rules and the additional rules generated by applying the data augmentation and data generation techniques. In various examples, applying a data augmentation technique on the plurality of rules comprises at least one of combining, splitting, or swapping rules in the plurality of rules. In various examples, a data generator tool is also used. In various examples, the data generator tool is applied by the data uploader subsystem of the data creator. Data generator tool is any commercially available data generator tool, such as Datprof, IRI RowGen, DTM Data Generator, Upscene, Redgate, etc.

In FIG 8, it is shown that 13 new rows have been added by data augmentation. In various examples, any number of the described data augmentation techniques is applied, however in the example shown in FIG 8, only two techniques are applied. The techniques are merging and splitting rules, also referred to as permutation and combination of rules.

Rows 1 and 11 of the table have the action result 'RunScript'. These rows also have AttackSeverity, HostImportance values of 3 and HostAccessibility values of X. These rows only differ in AttackImpact value, as row 1 has a value of 'I' and row 11 has a value of 'A'. Hence, row 13 is introduced, which combines these rules and assigns an AttackImpact value of 'IA'. For rows 2, 4, 6, 10, and 12, these rules are split for AttackImpact of CI to AttackImpact of C and AttackImpact I to generate new rules in rows 14 to 23. Lastly, rows 24 and 25 are generated by permutation and combination of new generated rows 16 to 21 for values of AttackSeverity and HostImportance.

The augmented data frame (which contains the plurality of rules and additional rules generated) is much larger than the original set of rules. This means that the dataset is much larger and is usable to train machine learning models and/or to add to an IRS rule base. This additional data is otherwise hard to come by. Therefore, there is an intrusion response method as well as a method (which in various examples, is computer implemented) for training an IRS. The method comprises training an intrusion response system comprising the methods described herein. The method further comprises receiving details of a cyber-attack and providing the details to the intrusion response system to determine a response to the cyber-attack and performing the determined response.

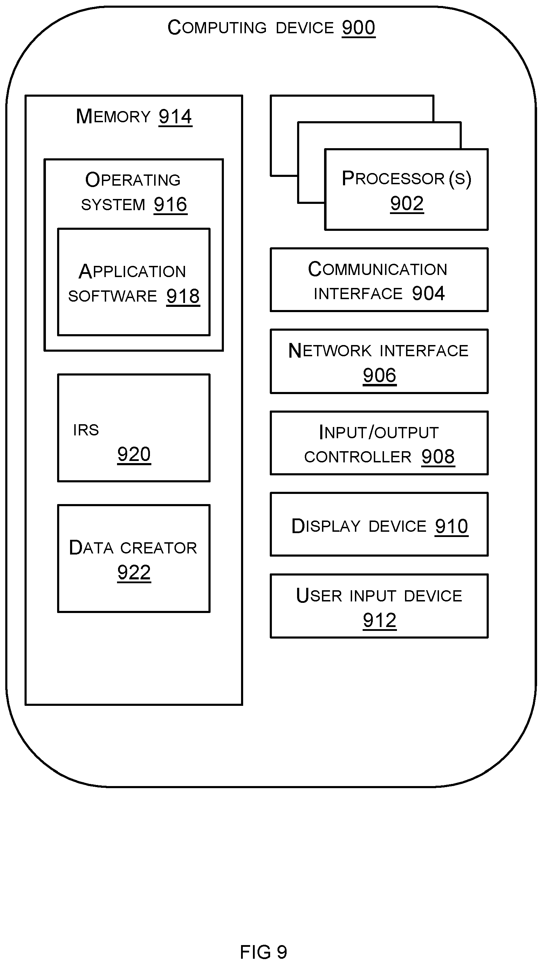

FIG 9 illustrates various components of an example computing device 900 in which embodiments of the present invention are implemented in some examples. The computing device is of any suitable form such as a communications network node, a smart phone, a desktop computer, a tablet computer, a laptop computer.

The computing device 900 comprises one or more processors 902 which are microprocessors, controllers, or any other suitable type of processors for processing computer executable instructions to control the operation of the device in order to create data for training an IRS, train an IRS, and carry out operation of an IRS, such as by performing the methods of figures 2 to 8. In some examples, for example where a system on a chip architecture is used, the processors 902 include one or more fixed function blocks (also referred to as accelerators) which implement a part of the method of figures 1 to 8 in hardware (rather than software or firmware). That is, the methods described herein are implemented in any one or more of software, firmware, hardware. The computing device has a memory 914 holding data creator 922 and an IRS 920. Platform software comprising an operating system 916 or any other suitable platform software is provided at the computing-based device to enable application software 918 to be executed on the device. Although the computer storage media (memory 914) is shown within the computing-based device 900 it will be appreciated that the storage is, in some examples, distributed or located remotely and accessed via a network or other communication link (e.g. using communication interface 904).

The computing-based device 900 also comprises an input/output controller 908 arranged to output display information to a display device 910 which may be separate from or integral to the computing-based device 900. The display information may provide a graphical user interface such as to display tables to a human expert as part of a human in the loop mechanism. The input/output controller 908 is also arranged to receive and process input from one or more devices, such as a user input device 912 (e.g. a mouse, keyboard, camera, microphone, or another sensor). In some examples the user input device 912 detects voice input, user gestures or other user actions. In an embodiment the display device 910 also acts as the user input device 912 if it is a touch sensitive display device. The input/output controller 908 outputs data to devices other than the display device in some examples.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

**Claims**

1. A computer-implemented method of training an intrusion response system, IRS, the method comprising:

    receiving a plurality of rules for responding to cyber-attacks;
    generating additional rules by applying a data augmentation technique to the plurality of rules; and
    providing the plurality of rules and the additional rules as training data to the IRS.

2. The computer-implemented method of claim 1, comprising detecting a potential threat that matches at least one of the rules in the plurality of rules and additional rules with the IRS, subsequent to training the IRS with the training data.

3. The computer-implemented method of any preceding claim, wherein receiving the plurality of rules for responding to cyber-attacks comprises extracting the plurality of rules from a store of rules wherein the plurality of rules is extracted by a rule reader.

4. The computer-implemented method of claim 3, wherein the computer-implemented method further comprises parsing the plurality of rules, wherein parsing the plurality of rules comprises separating the rules into features and values and labelling the features and values with responses extracted from the rules, by a rule parser.

5. The computer-implemented method of clam 4, further comprising populating a table, using a data inhabitor, with the labelled features and values.

6. The computer-implemented method of claim 5, further comprising applying a method of interpolation to data in the table to interpolate missing values in the table.

7. The computer-implemented method of claim 6, wherein the method of interpolation is linear interpolation.

8. The computer-implemented method of claim 5 or claim 6, further comprising approving the data in the table by a human-in-the-loop, HITL mechanism.

9. The computer-implemented method of any preceding claim, wherein generating additional rules by applying a data augmentation technique to the plurality of rules comprises at least one of combining, splitting, or swapping rules in the plurality of rules.

10. The computer-implemented method of any preceding claim, wherein generating additional rules further comprises applying data generation techniques to the plurality of rules and the additional rules..

11. The computer-implemented method of any preceding claim, wherein providing the plurality of rules and the additional rules as training data to the IRS comprises uploading the rules to a database using a data uploader, wherein the database is accessible by the IRS.

12. The computer-implemented method of any preceding claim, wherein the plurality of rules is received in at least one of a textual or equation format.

13. The computer implemented method of any preceding claim, wherein the plurality of rules is received from a knowledge base, wherein the knowledge base is used by a knowledge-driven approach IRS.

14. An apparatus comprising: at least one processor; and a memory storing instructions that, when executed by the at least one processor, perform a method for training an intrusion response system, IRS, comprising:

   receiving a plurality of rules for responding to cyber-attacks;
   generating additional rules by applying a data augmentation technique to the plurality of rules; and
   providing the plurality of rules and the additional rules as training data to the IRS.

15. An intrusion response method comprising:

   training an intrusion response system using the method of any preceding claim;
   receiving details of a cyber-attack and providing the details the intrusion response system to determine a response to the cyber-attack; and
   performing the determined response.

FIG 1

200A

202A

KNOWLEDGE → SIGNATURE CREATION

204A NETWORK LOG → SIGNATURE MATCHING → SELECTED RESPONSE 208A

206A

FIG 2A

200B

202B

TRAINING DATA → TRAINING

204B NETWORK LOG → TRAINED MODEL → SELECTED RESPONSE 208B

206B

FIG 2B

RECEIVE A PLURALITY OF RULES FOR RESPONDING TO CYBER-ATTACKS 300

GENERATE ADDITIONAL RULES BY APPLYING A DATA AUGMENTATION TECHNIQUE TO THE PLURALITY OF RULES 302

PROVIDING THE PLURALITY OF RULES AND THE ADDITIONAL RULES AS TRAINING DATA TO THE INTRUSION RESPONSE SYSTEM 304

OPTIONALLY, DETECT A POTENTIAL THREAT WITH THE IRS SUBSEQUENT TO TRAINING THE IRS WITH THE TRAINING DATA 306

FIG 3

FIG 4A

FIG 4B

```
          ┌─────────────┐
          │    START    │
          └─────────────┘
                 │
                 ▼
  ┌──────────────────────────────┐
  │          READ RULES          │
  │   ┌──────────────────────┐   │        500A
  │   │      TEXT FORM        │   │
  │   ├──────────────────────┤   │
  │   │    EQUATION FORM      │   │
  │   └──────────────────────┘   │
  └──────────────────────────────┘
                 │
                 ▼
  ┌──────────────────────────────┐
  │          PARSE RULES         │
  │   ┌──────────────────────┐   │
  │   │  FEATURE EXTRACTION   │   │        502A
  │   ├──────────────────────┤   │
  │   │   VALUE EXTRACTION    │   │
  │   ├──────────────────────┤   │
  │   │   LABEL EXTRACTION    │   │
  │   └──────────────────────┘   │
  └──────────────────────────────┘
                 │
                 ▼
  ┌──────────────────────────────┐
  │         INHABIT DATA         │
  │   ┌──────────────────────┐   │
  │   │  POPULATE DATAFRAME   │   │        504A
  │   ├──────────────────────┤   │
  │   │   CHOOSE DATAFRAME    │   │
  │   ├──────────────────────┤   │
  │   │ INTERPOLATE DATAFRAME │   │
  │   └──────────────────────┘   │
  └──────────────────────────────┘
                 │
                 ▼
  ┌──────────────────────────────┐
  │       HUMAN IN THE LOOP      │
  │   ┌──────────────────────┐   │        506A
  │   │    APPROVE THE DATA   │   │
  │   └──────────────────────┘   │
  └──────────────────────────────┘
                 │
                 ▼
  ┌──────────────────────────────┐
  │       UPLOAD DATABASE        │
  │   ┌──────────────────────┐   │
  │   │    AUGMENT THE DATA   │   │        508A
  │   ├──────────────────────┤   │
  │   │  ADD THE GENERATED DATA │ │
  │   └──────────────────────┘   │
  └──────────────────────────────┘
                 │
                 ▼
          ┌─────────────┐
          │     END     │
          └─────────────┘
```

FIG 5

RECEIVE LABELLED DATA 600

POPULATE TABLE WITH LABELLED DATA 602

MISSING VALUES IN TABLE? 604

YES

INTERPOLATE THE MISSING VALUES 606

NO

PASS TABLE TO DATA UPLOADER (OR HUMAN-IN-THE-LOOP) 608

FIG 6

| Row | AttackSeverity | Host Importance | HostAccessibility | AttackImpact | Action |
|---|---|---|---|---|---|
| 1 | 3 | 3 | X | NA | RunScript |
| 2 | NA | 1 | NA | CI | Shutdown |
| 3 | 1 | 1 | NA | A | Monitor |
| 4 | 5 | NA | R | NA | UpdateEncryption |
| 5 | 5 | 1 | NA | I | SendEmail |
| 6 | 1 | 5 | R | NA | UpdateEncryption |
| 7 | 3 | 3 | W | NA | BlockPort |
| 8 | 3 | 2 | X | NA | RunScript |
| 9 | 5 | NA | NA | I | SendEmail |
| 10 | NA | 5 | R | NA | UpdateEncryption |
| 11 | 3 | 3 | X | NA | RunScript |
| 12 | 5 | NA | NA | CI | BlockPort |

FIG 7A

| Row | AttackSeverity | Host Importance | HostAccessibility | AttackImpact | Action |
|---|---|---|---|---|---|
| 1 | 3 | 3 | X | I | RunScript |
| 2 | 5 | 1 | W | CI | Shutdown |
| 3 | 1 | 1 | X | A | Monitor |
| 4 | 5 | 3 | R | CI | UpdateEncryption |
| 5 | 5 | 1 | R | I | SendEmail |
| 6 | 1 | 5 | R | CI | UpdateEncryption |
| 7 | 3 | 3 | W | A | BlockPort |
| 8 | 3 | 2 | X | I | RunScript |
| 9 | 5 | 1 | R | I | SendEmail |
| 10 | 5 | 5 | R | CI | UpdateEncryption |
| 11 | 3 | 3 | X | A | RunScript |
| 12 | 5 | 5 | W | CI | BlockPort |

FIG 7B

| Row | AttackSeverity | Host Importance | HostAccessibility | AttackImpact | Action |
|---|---|---|---|---|---|
| 1 | 3 | 3 | X | I | RunScript |
| 2 | 5 | 1 | W | CI | Shutdown |
| 3 | 1 | 1 | X | A | Monitor |
| 4 | 5 | 3 | R | CI | UpdateEncryption |
| 5 | 5 | 1 | R | I | SendEmail |
| 6 | 1 | 5 | R | CI | UpdateEncryption |
| 7 | 3 | 3 | W | A | BlockPort |
| 8 | 3 | 2 | X | I | RunScript |
| 9 | 5 | 1 | R | I | SendEmail |
| 10 | 5 | 5 | R | CI | UpdateEncryption |
| 11 | 3 | 3 | X | A | RunScript |
| 12 | 5 | 5 | W | CI | BlockPort |
| 13 | 3 | 3 | X | AI | RunScript |
| 14 | 5 | 1 | W | C | Shutdown |
| 15 | 5 | 1 | W | 1 | Shutdown |
| 16 | 5 | 3 | R | C | UpdateEncryption |
| 17 | 5 | 3 | R | I | UpdateEncryption |
| 18 | 1 | 5 | R | C | UpdateEncryption |
| 19 | 1 | 5 | R | I | UpdateEncryption |
| 20 | 5 | 5 | R | C | UpdateEncryption |
| 21 | 5 | 5 | R | C | UpdateEncryption |
| 22 | 5 | 5 | W | C | BlockPort |
| 23 | 5 | 5 | W | I | BlockPort |
| 24 | 1 | 3 | R | C | UpdateEncryption |
| 25 | 1 | 3 | R | I | UpdateEncryption |

FIG 8

COMPUTING DEVICE 900

MEMORY 914

OPERATING SYSTEM 916

APPLICATION SOFTWARE 918

IRS 920

DATA CREATOR 922

PROCESSOR (S) 902

COMMUNICATION INTERFACE 904

NETWORK INTERFACE 906

INPUT/OUTPUT CONTROLLER 908

DISPLAY DEVICE 910

USER INPUT DEVICE 912

FIG 9

Europäisches
Patentamt

European
Patent Office

Office européen
des brevets

# EUROPEAN SEARCH REPORT

**Application Number**

**EP 24 15 8107**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/109926 A1 (NAIR BIJU BALAKRISHNAN [IN] ET AL) 13 April 2023 (2023-04-13) | 1-5,8-15 | INV.<br>H04L9/40<br>G06N5/025<br>G06N20/00 |
| Y | * paragraph [0047] – paragraph [0385] * | 6,7 | |
| X | CN 115 622 806 A (NANJING ZHONGZHIWEI INFORMATION TECH CO LTD) 17 January 2023 (2023-01-17) | 1-4,12,14,15 | |
| A | * paragraph [0002] – paragraph [0055] * | 5-11,13 | |
| Y | Mit Critical Data ET AL: "Missing Data" In: "Secondary Analysis of Electronic Health Records", 9 September 2016 (2016-09-09), Springer International Publishing, Cham, XP093147380, ISBN: 978-3-319-43742-2 pages 143-162, DOI: 10.1007/978-3-319-43742-2_13, Retrieved from the Internet: URL:https://www.ncbi.nlm.nih.gov/books/NBK 543620/pdf/Bookshelf_NBK543620.pdf> | 6,7 | |
| A | * page 143 – page 151 * | 5 | TECHNICAL FIELDS SEARCHED (IPC)<br><br>G06F<br>H04L |
| A | US 2023/419040 A1 (ABOBAKR AHMED ATAALLAH ATAALLAH [AU] ET AL) 28 December 2023 (2023-12-28) * paragraph [0040] * * paragraph [0120] * | 9 | |
| A | CN 116 633 601 A (JIANGSU DONGYUN CLOUD COMPUTING CO LTD) 22 August 2023 (2023-08-22) * paragraph [0002] – paragraph [0099] * | 1-15 | |

-/--

The present search report has been drawn up for all claims

| Place of search | Date of completion of the search | Examiner |
|---|---|---|
| Munich | 4 April 2024 | Dang, Hoai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

**Application Number**

EP 24 15 8107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OTOKWALA UNENEIBOTEJIT ET AL: "Improving Intrusion Detection Through Training Data Augmentation", 2021 14TH INTERNATIONAL CONFERENCE ON SECURITY OF INFORMATION AND NETWORKS (SIN), IEEE, vol. 1, 15 December 2021 (2021-12-15), pages 1-8, XP034081926, DOI: 10.1109/SIN54109.2021.9699293 [retrieved on 2022-01-31] * page 831 - page 836 * ----- | 1-15 | |
| A | CHKIRBENE ZINA ET AL: "Data Augmentation for Intrusion Detection and Classification in Cloud Networks", 2021 INTERNATIONAL WIRELESS COMMUNICATIONS AND MOBILE COMPUTING (IWCMC), IEEE, 28 June 2021 (2021-06-28), pages 831-836, XP033955823, DOI: 10.1109/IWCMC51323.2021.9498633 [retrieved on 2021-07-27] * page 831 - page 836 * ----- | 1-15 | TECHNICAL FIELDS SEARCHED (IPC) |

The present search report has been drawn up for all claims

| Place of search | Date of completion of the search | Examiner |
|---|---|---|
| Munich | 4 April 2024 | Dang, Hoai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 15 8107

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2024

| Patent document cited in search report | | Publication date | Patent family member(s) | | Publication date |
|---|---|---|---|---|---|
| US 2023109926 | A1 | 13-04-2023 | US | 2023109926 A1 | 13-04-2023 |
| | | | US | 2023111304 A1 | 13-04-2023 |
| | | | US | 2023111864 A1 | 13-04-2023 |
| | | | US | 2023113375 A1 | 13-04-2023 |
| | | | US | 2023113621 A1 | 13-04-2023 |
| | | | US | 2023114719 A1 | 13-04-2023 |
| | | | US | 2023114821 A1 | 13-04-2023 |
| CN 115622806 | A | 17-01-2023 | NONE | | |
| US 2023419040 | A1 | 28-12-2023 | US | 2023419040 A1 | 28-12-2023 |
| | | | US | 2023419052 A1 | 28-12-2023 |
| | | | US | 2023419127 A1 | 28-12-2023 |
| | | | WO | 2023249684 A1 | 28-12-2023 |
| CN 116633601 | A | 22-08-2023 | NONE | | |

EPO FORM P0459

For more details about this annex : see Official Journal of the European Patent Office, No. 12/82